Europäisches Patentamt

European Patent Office

Office européen des brevets

(19)

(11) Numéro de publication: **0 162 441**
**B1**

(12) **FASCICULE DE BREVET EUROPEEN**

(45) Date de publication du fascicule du brevet:
26.07.89

(21) Numéro de dépôt: 85106204.2

(22) Date de dépôt: 21.05.85

(51) Int. Cl.⁴: **B 04 C 3/00**, F 22 B 37/32,
B 01 D 45/16

(54) Séparateur de mélanges par centrifugation.

(30) Priorité: 23.05.84 FR 8408085
24.01.85 FR 8501015

(43) Date de publication de la demande:
27.11.85 Bulletin 85/48

(45) Mention de la délivrance du brevet:
26.07.89 Bulletin 89/30

(84) Etats contractants désignés:
BE CH DE FR GB IT LI SE

(56) Documents cités:
EP-A- 0 005 494
DE-A- 2 256 678
FR-A- 961 953
FR-A- 1 020 317
FR-A- 1 522 028
US-A- 2 921 646

(73) Titulaire: STEIN INDUSTRIE Société Anonyme dite:,
19-21, avenue Morane Saulnier, F-78140 Vélizy
Villacoublay (FR)
Titulaire: ELECTRICITE DE FRANCE Service National, 2,
rue Louis Murat, F-75008 Paris (FR)

(72) Inventeur: Cerdan, Jean-Pierre, 6 sente de Lutins "Le
Hameau", F-78480 Verneuil (FR)
Inventeur: Dueymes, Eric, 44, Avenue du Maréchal Foch,
F-78400 Chatou (FR)
Inventeur: Talleu, Patrick, 23, rue Gambetta,
F-78800 Houilles (FR)
Inventeur: Carnel, Jean, 37, rue Henri Lebleu Fleurbaix,
F-62840 Laventie (FR)
Inventeur: Palaclo, Gérard, 60, rue du Lac Marchais,
F-95170 Deuil la Barre (FR)
Inventeur: Franzolini, Marc, 4, Allée les Fours Blancs
Chevry 2, F-91191 Gif Sur Yvette (FR)

(74) Mandataire: Weinmiller, Jürgen et al,
Lennéstrasse 9 Postfach 24, D-8133 Feldafing (DE)

## Description

La présente invention concerne un séparateur d'un mélange d'une vapeur (ou un gaz, ou un liquide) et d'un liquide (ou un solide) par centrifugation à l'intérieur d'une enceinte enveloppant au moins une cellule, ce séparateur pouvant être installé verticalement ou horizontalement. Chaque cellule comporte un canal de circulation ménagé entre un tube de circulation et un organe central de guidage, un dispositif pour imprimer au mélange un écoulement tourbillonnaire à l'entrée du canal de circulation, un tube de recueil d'une partie moins dense du mélange initial, installé à la sortie du tube de circulation, au moins un dispositif d'extraction d'une partie plus dense de ce mélange, au moins une chambre de recueil de cette partie, des moyens de réintroduction partielle de cette partie plus dense dans le mélange à séparer ou en cours de séparations, les moyens de réintroduction consistant en au moins une conduite d'extraction et en au moins un canal de réinjection.

On connaît, notamment par le document FR-A 1 522 028, un tel séparateur dont la conduite d'extraction est extérieure au tube de circulation, ce qui augmente notablement l'encombrement du séparateur.

La présente invention a pour but de rendre le séparateur le plus compact possible afin d'éviter au maximum les pertes de charges.

Ce but est atteint en proposant de nouveaux moyens de réintroduction qui consistent en un organe central du guidage creux se prolongeant sur toute la longueur de la cellule, la réintroduction partielle se faisant par l'intérieur de cet organe.

Le séparateur de la présente invention est caractérisé en ce que l'organe central de guidage est creux, et ceci sur toute la longueur de la cellule, et en ce que la conduite d'extraction traverse le tube de recueil pour relier ladite chambre de recueil et l'intérieur de l'organe central de guidage, et en ce que les canaux de réinjection (116, 116 A) sont réalisés dans l'organe central de guidage (120) en aval du dispositif d'écoulement tourbillonnaire (102).

On connaît aussi, par le document FR-B 1 020 317, un dépoussiéreur tubulaire comportant un organe central de guidage creux, une conduite reliant cet organe et des orifices pratiqués dans celui-ci, mais la conduite et les orifices servent à provoquer un appel d'air accélérant la sortie des poussières.

Le tube de recueil du séparateur de l'invention est avantageusement muni d'un dispositif de redressage de l'écoulement, la conduite d'extraction étant située en aval de ce dispositif de redressage.

De préférence, et ceci dans chaque cellule, une cloche enveloppe le tube de recueil au niveau de la conduite d'extraction, et une jupe cylindrique enveloppe chaque cellule depuis le dispositif d'extraction jusqu'à l'extrémité de la cloche.

De préférence, la conduite d'extraction a une section en forme de goutte d'eau pour perturber au minimum l'écoulement principal sortant du dispositif de redressage.

Selon une variante, l'organe central de guidage est constitué d'au moins deux parties comportant chacune, à une extrémité, une portée annulaire, les canaux de réinjection étant réalisés entre les deux portées annulaires reliées entre elles par des aubes, et avantageusement en aval des canaux de réinjection, le diamètre de l'organe central est réduit, augmentant ainsi la section de passage du mélange pour compenser l'augmentation de débit que représente la partie du mélange sortant des canaux de réinjection.

Il est décrit ci-après, à titre d'exemple et en référence aux dessins annexés, un séparateur selon l'invention.

La figure 1 représente un séparateur constitué d'une enceinte enveloppant une seule cellule.

La figure 2 représente la même cellule enveloppée par une jupe cylindrique, la conduite d'extraction étant protégée par une cloche.

La figure 3 représente une coupe selon III de la figure 2.

La figure 4 représente une variante du moyeu central.

La figure 5 représente une coupe de cette variante, selon V de la figure 4.

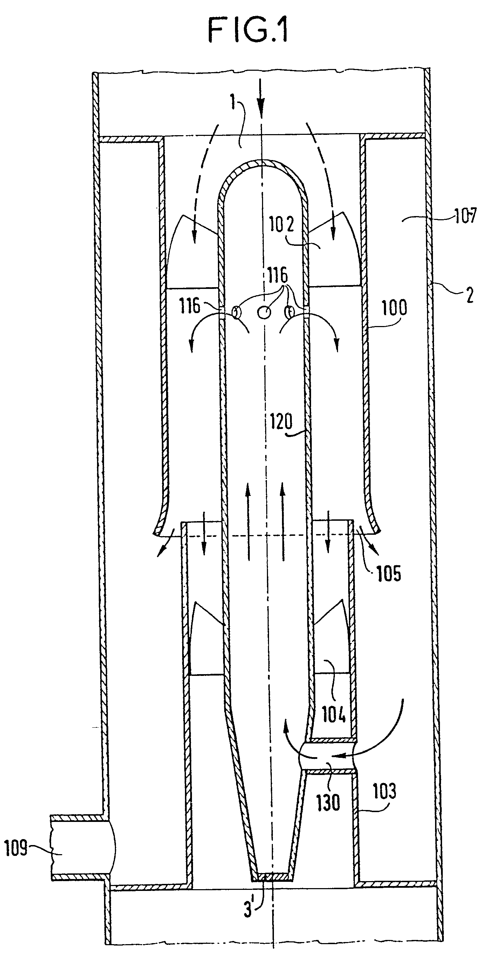

La figure 1 représente, en coupe axiale, un séparateur d'un mélange eau-vapeur. Ce séparateur est constitué d'une enceinte 2 enveloppant une seule cellule constituée par:

– un organe central de guidage ou moyeu central 120 dont le fond comporte un bouchon 3',
– un tube de circulation 100,
– un dispositif ou distributeur 102 de mise en rotation du mélange à séparer. Ce distributeur 102 est constitué d'ailettes fixées sur le moyeu central 120,
– un tube de recueil 103 de vapeur quasiment sèche, et muni d'un dispositif 104 de redressage de l'écoulement. Ce dispositif 104 est constitué d'ailettes fixées sur le moyeu central 120,
– un dispositif d'extraction 105 mettant en communication l'écoulement avec un dispositif de recueil ou chambre 107,
– une conduite d'extraction 130 qui relie le tube 103 et le moyeu 120 pour réintroduire la vapeur et une partie de l'eau extraites par le dispositif 105, à l'intérieur du moyeu 120. La section de cette conduite a une forme de goutte d'eau dont l'extrémité arrondie est bien entendu située face à l'écoulement, pour ne pas créer de pertes de charge supplémentaires dans l'écoulement principal sortant de ce dispositif de redressement.

Le séparateur est muni d'une tubulure 109 pour l'évacuation de l'eau.

Une opération d'extraction s'effectue de la manière suivante: Le mélange eau-vapeur à séparer pénètre dans l'ensemble de séparation par l'extrémité 1. Les ailettes du distributeur 102 lui communiquent un mouvement tourbillonnaire sous l'effet duquel l'eau est centrifugée vers le tube de circulation.

La quasi-totalité de l'eau ruisselant sur le tube 100, ou se trouvant au voisinage de la paroi de ce tube, pénètre dans le dispositif 105 et se dirige vers la chambre 107 puis vers la tubulure d'évacuation 109. La pénétration de l'eau dans le dispositif 105 et son évacuation peuvent être favorisées par l'extraction d'une certaine fraction de vapeur. Le débit principal de vapeur non extrait par le dispositif 105, ainsi éventuellement qu'une faible quantité d'eau résiduelle, c'est-à-dire non évacuée par ce dispositif 105, pénètrent dans le tube 103 et rencontrent le dispositif de redressage 104 destiné à supprimer le mouvement tourbillonnaire de l'écoulement. A la sortie de l'ensemble de séparation on trouve donc une vapeur sèche ou quasiment sèche, et animée d'un mouvement pratiquement axial.

La vapeur et une partie de l'eau extraites par le dispositif 105 sont introduites dans le moyeu 120 à travers la conduite d'extraction 130, et réintroduites dans le mélange en cours de séparation par les canaux de réinjection 116 situés en aval du distributeur 102 et répartis circonférenciellement.

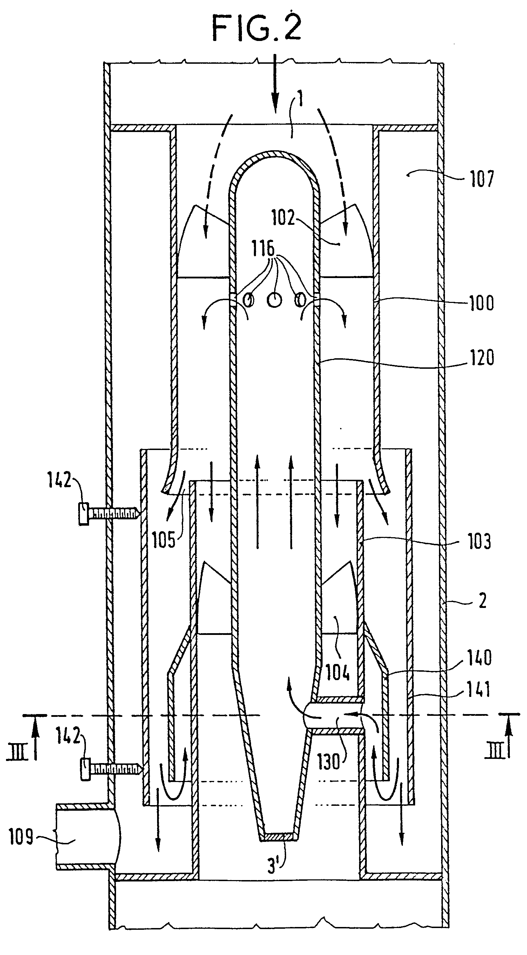

Dans le figure 2, pour ne pas noyer la conduite d'extraction 130, cette cellule comporte une cloche 140 fixée au tube 103 par exemple par soudage, qui enveloppe ce tube sur toute sa périphérie au niveau de la conduite. Dans le cas d'un séparateur à plusieurs cellules, une seule étant ici représentée, on enveloppe chaque cellule par une jupe cylindrique 141 pour bien les séparer. Cette jupe est tenue par des vis 142 réparties circonférentiellement, et de préférence en trois points.

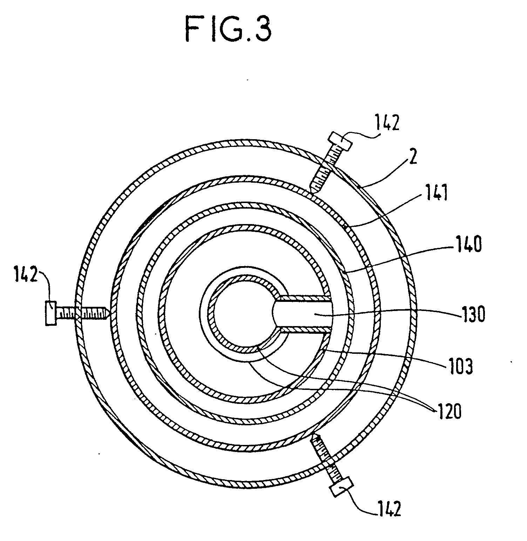

La figure 3 représente une coupe du séparateur, selon III de la figure 2. Pour une question de clarté, le dispositif de redresssage 104 n'a pas été représenté. On voit du centre vers la périphérie, le moyeu central 120, la conduite d'extraction 130, le tube 103, la cloche 140, la jupe 141 et ses moyens de fixation 142, et l'enceinte 2. Les moyens de fixation de la jupe sont six vis 142, réparties sur deux plans différents (voir figure 2), et à 120° dans un même plan. Dans le cas d'un séparateur placé horizontalement, la jupe 141 peut être munie de trous en regard de la tubulure d'évacuation 109. Ces trous permettent d'évacuer le liquide qui s'accumulerait dans la partie inférieure de la jupe.

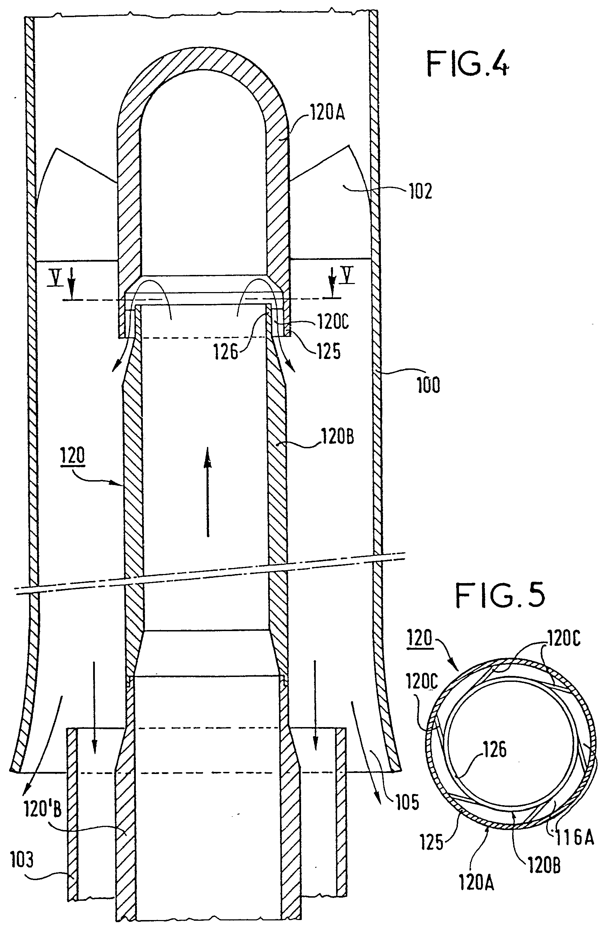

La figure 4 représente une variante du moyeu central constitué en plusieurs parties et comportant d'autres canaux de réinjection.

Dans cette figure 4, il est représenté un moyeu axial 120, un tube de circulation 100 et un distributeur 102 fixé sur le moyeu 120 et sur le tube 100. Le moyeu 120 est constitué de trois parties 120A, 120B, 120'B, les parties 120B, 120'B pouvant bient entendu être réalisées en une seule.

Une extrémité de la partie 120A représente une portée annulaire externe 125, et une extrémité de la partie 120B représente une portée annulaire interne 126. Entre ces deux portées 125, 126, des aubes 120C, mieux visibles en figure 5, sont soudées inclinées par rapport à un plan radial pour imprimer au mélange vapeur-eau réinjecté un mouvement tourbillonaire de même sens que celui du mélange sortant du distributeur 102. Les canaux de réinjection 116A sont également visibles dans cette figure 5.

La partie centrale 120B, ainsi que l'extrémité de la partie 120'B ont dans cet exemple un diamètre extérieur réduit par rapport à la partie 120A pour compenser l'augmentation de débit.

Bien entendu, le diamètre extérieur de la partie 120'B reprend la valeur du diamètre de la partie 120A, aux environs de l'entrée du tube de recueil 103.

**Revendications**

1. Séparateur d'un mélange d'une vapeur (ou un gaz, ou un liquide) et d'un liquide (ou un solide) par centrifugation à l'intérieur d'une enceinte (2) enveloppant au moins une cellule comportant, un canal de circulation ménagé entre un tube de circulation (100) et un organe central de guidage (120), un dispositif (102) pour imprimer au mélange un écoulement tourbillonnaire à l'entrée du canal de circulation, un tube de recueil (103) d'une partie moins dense du mélange initial, installé à la sortie du tube de circulation, au moins un dispositif d'extraction (105) d'une partie plus dense de ce mélange, au moins une chambre de recueil (107) de cette partie, des moyens de réintroduction partielle de cette partie plus dense dans le mélange à séparer ou en cours de séparation, les moyens de réintroduction consistant en au moins une conduite d'extraction (130) et au moins un canal de réinjection (116, 116A), caractérisé en ce que l'organe central de guidage (120) est creux, et ceci sur toute la longueur de la cellule, et en ce que la conduite d'extraction (130) traverse le tube de recueil pour relier ladite chambre de recueil (107) et l'intérieur de l'organe central de guidage (120), et en ce que les canaux de réinjection (116, 116A) sont réalisés dans l'organe central de guidage (120) en aval du dispositif d'écoulement tourbillonnaire (102).

2. Séparateur selon la revendication 1, caractérisé en ce que le tube de recueil (103) est muni d'un dispositif de redressage (104) de l'écoulement, la conduite d'extraction (130) étant située en aval de ce dispositif de redressage (104).

3. Séparateur selon la revendication 1 ou 2, caractérisé en ce que, dans chaque cellule, une cloche (140) enveloppe le tube de recueil (103), au niveau de la conduite d'extraction (130).

4. Séparateur selon la revendication 3, caractérisé en ce qu'une jupe cylindrique (141) enveloppe chaque cellule depuis le dispositif d'extraction (105) jusqu'à l'extrémité de la cloche (140).

5. Séparateur selon l'une des revendications précédentes, caractérisé en ce que la conduite d'extraction (130) a une section en forme de goutte d'eau pour perturber au minimum l'écoulement principal sortant du dispositif de redressage (104).

6. Séparateur selon l'une des revendications précédentes, caractérisé en ce que l'organe central de guidage (120) est constitué d'au moins deux parties (120A, 120B) comportant chacune, à une extrémité, une portée annulaire (125, 126), les canaux de réinjection (116A) étant réalisés entre les deux portées annulaires reliées ente elles par des aubes (120C).

7. Séparateur selon la revendication 6, caractérisé en ce que, en aval des canaux de réinjection (116A), le diamètre de l'organe central est réduit, augmentant ainsi la section de passage du mélange pour compenser l'augmentation du débit que représente la partie du mélange sortant des canaux de réinjection.

## Patentansprüche

1. Separator für eine Mischung aus einem Dampf (oder einem Gas oder einer Flüssigkeit) und einer Flüssigkeit (oder einem Feststoff) durch Zentrifugieren im Inneren einer Kammer (2), die mindestens eine Zelle umgibt, welche einen Zirkulationskanal, der zwischen einem Zirkulationsrohr (100) und einem zentralen Speiseorgan (120) angeordnet ist, eine Vorrichtung (102), um der Mischung am Eingang des Zirkulationskanals eine Wirbelströmung aufzuprägen, ein Auffangrohr (103) für einen weniger dichten Teil der ursprünglichen Mischung, das am Ausgang des Zirkulationsrohrs angeordnet ist, mindestens eine Vorrichtung (105) zur Entnahme eines dichteren Teils dieser Mischung, mindestens eine Auffangkammer (107) für diesen Teil, und Mittel aufweist, durch die dieser dichtere Teil teilweise wieder in die zu trennende oder gerade in Trennung befindliche Mischung eingeführt wird, wobei die Wiedereinführmittel aus mindestens einer Entnahmeleitung (130) und mindestens einem Rückspeisekanal (116, 116A) bestehen, dadurch gekennzeichnet, dass das zentrale Speiseorgan (120) hohl ist, und dies über die ganze Länge der Zelle, und dass die Entnahmeleitung (130) das Auffangrohr durchquert, um die Auffangkammer (107) und das Innere des zentralen Speiseorgans (120) miteinander zu verbinden, und dass die Rückspeisekanäle (116, 116A) in dem zentralen Speiseorgan (120) stromabwärts hinter der Verwirbelungsvorrichtung (102) angeordnet sind.

2. Separator nach Anspruch 1, dadurch gekennzeichnet, dass das Auffangrohr (103) mit einer Entwirbelungsvorrichtung versehen ist, wobei die Entnahmeleitung (130) sich stromabwärts hinter dieser Entwirbelungsvorrichtung (104) befindet.

3. Separator nach Anspruch 1 oder 2, dadurch gekennzeichnet, dass in jeder Zelle eine Glocke (140) das Auffangrohr (103) in Höhe der Entnahmeleitung (130) umgibt.

4. Separator nach Anspruch 3, dadurch gekennzeichnet, dass eine zylindrische Schürze (141) jede Zelle von der Entnahmevorrichtung (105) bis zum Ende der Glocke (140) umgibt.

5. Separator nach einem der vorhergehenden Ansprüche, dadurch gekennzeichnet, dass die Entnahmeleitung (130) einen Querschnitt in Form eines Wassertropfens hat, um die von der Entwirbelungsvorrichtung (104) kommende Hauptströmung möglichst wenig zu stören.

6. Separator nach einem der vorhergehenden Ansprüche, dadurch gekennzeichnet, dass das zentrale Speiseorgan (120) aus mindestens zwei Teilen (120A, 120B) besteht, die je an einem Ende einen ringförmigen Bereich (125, 126) aufweisen, wobei die Rückspeisungskanäle (116A) zwischen den beiden ringförmigen Bereichen angeordnet sind, die untereinander durch Schaufeln (120C) verbunden sind.

7. Separator nach Anspruch 6, dadurch gekennzeichnet, dass stromabwärts von den Rückspeisungskanälen (116A) der Durchmesser des zentralen Organs verkleinert ist, wodurch der Durchtrittsquerschnitt für die Mischung vergrössert wird, um die Erhöhung des Durchsatzes zu kompensieren, die der aus den Rückspeisungskanälen austretende Teil der Mischung darstellt.

## Claims

1. A separator for separating a mixture of a vapour (or a gas or a liquid) from a liquid (or a solid) by centrifuging the mixture in an enclosure (2) surrounding at least one cell, comprising a circulator channel disposed between a circulator tube (100) and a central guiding element (120), a device (102) for imparting a swirling flow to the mixture at the inlet to the circulator tube, a collector tube (103) for collecting a less dense portion of the initial mixture, installed at the circulator tube outlet, at least one extractor device (105) for extracting a denser portion of this mixture, at least one collector chamber (107) for collecting this portion, means for reinjecting a part of said denser portion into the mixture to be separated or being separated, the reinjection means consisting in at least one extractor duct (130) and at least one reinjection channel (116, 116A) characterized in that the central guiding element (120) is hollow over the whole length of the cell, and that the extractor duct (130) passes through the collector tube in order to connect said collector chamber (107) with the inside of the central guiding element (120), and that the reinjection channels (116, 116A) are realised in the central guiding element downstream of the swirling flow device (102).

2. A separator according to claim 1, characterized in that the collector tube (103) is supplied with a flow straigthening device (104), the extractor duct (130) being situated downstream of this straightening device (104).

3. A separator according to claim 1 or 2, characterized in that in each cell, a bell (140) encloses the collector tube (103) at the level of the extractor duct (130).

4. A separator according to claim 3, characterized in that a cylindrical skirt (141) encloses each cell between the extractor device (105) and the end of the bell (140).

5. A separator according to one of the preceding claims, characterized in that the extractor duct (130) has a teardrop shape in order to disturb as little as possible the main flow leaving the straightening device (104).

6. A separator according to one of the preceding claims, characterized in that the central guiding element (120) is constituted by at least two portions (120A, 120B) each comprising at one end an annular zone (125, 126), the reinjection channels (116A) being disposed between the two annular zones which are interconnected by fins (120C).

7. A separator according to claim 6, characterized in that downstream of the reinjection channels (116A), the diameter of the central element is reduced, thereby increasing the cross-section of the flow passage of the mixture in order to compensate for the increased flow which is represented by the portion of the mixture leaving the reinjection channels.

# FIG.1

# FIG.2

# FIG.3

FIG.4

120A

102

V  V

120C

126   125

100

120

120B

120

120C

120C

126

116A

125

105

120A

120B

120'B

103

FIG.5